# EUROPEAN PATENT APPLICATION

(11) **EP 1 291 396 A1**
(43) Date of publication of application: **12.03.2003**
(21) Application number: 01307580.9
(22) Date of filing: 06.09.2001
(51) Int. Cl.: C09D 11/00

(54) **Ink jet printing processes and compositions for use therein**

(71) Applicant: DOMINO PRINTING SCIENCES PLC, Cambridge CB3 8TU (GB)
(72) Inventor: Bradley, Jonathan, Sutton, Ely CB6 2NR (GB); Upperton, Kim, Walthamstow, London (GB); Cutforth, Catherine, Somersham, Huntington PE28 3DZ (GB)
(74) Representative: Samuels, Lucy Alice

(57) **Abstract**

Indicia such as farm codes are printed onto eggshells using an ink which is invisible under visible light but visible under UV light. Preferably the eggs are also subjected to a step of printing with an ink visible under visible light. Since the UV fluorescent ink is not visible under visible light it does not interfere with the visible indicia. Suitable UV fluorescent colourants are curcumin, quinine, riboflavin, caffeine and erythrosine.

## Description

The invention relates to processes of printing indicia onto eggshells by ink jet printing methods, and to compositions which are suitable for use in these methods. It also relates to processes, and inks for use therein, for printing onto other types of food product.

It is known to print various indicia onto eggshells by ink jet printing methods before the eggs are sold. Such indicia include "best before" dates and quality marks. It is known to produce eggs in various conditions and consumers are prepared to pay a premium for eggs which they know have been produced by free range methods rather than battery methods. However, a problem has arisen in that certain distributors have attempted to pass off battery farmed eggs as free range eggs. There is no way for the final vendor or the consumer to establish whether a claim that any particular batch of eggs is free range is correct. Thus it would be desirable to be able to trace any particular egg back to the farm where it was produced.

One way in which this could be done would be to use the known ink jet printing methods to print information concerning the farm on to the eggs themselves. However, since in most cases other indicia are already printed on to the shell then there is a risk of overprinting, making both sets of information illegible.

To address this problem we provide, in a first aspect of the invention, a method of printing onto an eggshell using an ink jet printing method in which the ink is invisible under visible light but is fluorescent under ultraviolet (UV) light.

The advantage of printing using ink which is invisible to the human eye under visible light is that the problem of potential overprinting is removed. Indicia printed using the UV fluorescent ink do not mask or interfere with previously printed visible indicia. Furthermore, the invisible nature of the UV fluorescent ink reduces the risk of fraudulent activity and allows vendors and consumers to be confident about the origin of the product.

We find that certain materials are particularly suitable as a UV fluorescent colourant component of the UV fluorescent ink. These are quinine, riboflavin, curcumin, caffeine and erythrosine, all of which have the advantage that they are not harmful when applied to food products.

Thus according to a second aspect of the invention we provide an ink suitable for ink jet printing, the ink being invisible under visible light but visible under UV light, the colourant comprising a material selected from the group consisting of erythrosine, quinine and caffeine.

In the invention the UV fluorescent ink is invisible to the human eye under visible light. By this we mean the ink is essentially invisible under normal daylight. The ink is however visible under UV light, generally considered to have wavelength of from 400nm to 100nm.

The UV fluorescent ink may be used to print any desired indicia, for instance an indication of whether the eggs are free range or a code associated with the farm where they were produced.

The process of the invention preferably also includes a step of ink jet printing onto the eggshell with an ink which is visible under visible light. This may be done before or after application of the UV fluorescent ink. The visible ink may have any suitable colour and the indicia applied may be conventional such as best before dates, quality marks etc.

In the context of printing on to eggshells it is important that the components of the fluorescent ink are certified as food grade under the relevant regulations. That is, they should be permitted for use on food by for instance the EC and the FDA. In particular, we find that quinine, riboflavin, curcumin, caffeine and erythrosine are suitable for use as part of the UV colourant component because they are acceptable for food use and give good UV fluorescence.

Quinine will emit light of wavelength 400nm when exposed to UV light of wavelength 340nm. Riboflavin will emit light of wavelength 450nm when exposed to UV light of wavelength 350nm. Caffeine will emit light of wavelength 440nm when exposed to UV light of wavelength 370nm. Curcumin will emit light of wavelength 530nm when exposed to UV light of wavelength 470nm. Erythrosine will emit light of wavelength 570nm when exposed to UV light of wavelength 540nm. Thus although curcumin and erythrosine do not exhibit fluorescence when used alone they may form part of a cascade system, provided the colourant system is chosen so that the ink as a whole is fluorescent under UV light.

Suitable amounts of colourant are from 0.0001 to 2% by weight of the composition, preferably from 0.001 to 1.5%, generally not more than 1%.

The UV fluorescent colourant may comprise one or more materials which can cause the ink to be visible under visible light when present in relatively high amounts, but when they are present in lower amounts the ink is not visible under visible light but is visible under UV light. An example of such a colourant is erythrosine, which at percentages above 1% can impart a red colour to an ink but when used at lower percentage can result in an ink which is invisible under visible light but the erythrosine can nevertheless form part of a fluorescence cascade under UV light.

If a visible ink is used the colourant is also preferably chosen to be food grade, eg erythrosine. Suitable amounts of visible colourant are 0.001 to 5%, preferably 0.01 to 2%, in particular at least 1%.

Suitable visible inks are known and one is described in US 5,711,791.

Both types of ink jet ink will contain a binder which is preferably food grade. Examples include hydroxypropyl cellulose, shellac, ethyl cellulose, sugars and sugar alcohols such as mannitol and xylitol.

The amount of binder is preferably in the range 1 to 20%, in particular 2 to 20%, preferably 5 to 15%, more preferably 7 to 12%, by weight based on the total composition.

The inks also each include a liquid vehicle which is generally food grade. Examples are ethanol, water and acetone. Ethanol may be denatured, for instance industrial methylated spirit (IMS) or ethanol SDA 3A200, but absolute alcohol (containing no denaturant) is preferred.

The amount of liquid vehicle is typically in the range 65 to 99%, preferably 75 to 99%.

In some systems in which both UV fluorescent ink and visible ink are used it is preferred that they have a formulation which differs only in the amount and type of colourant.

The inks must be suitable for use in ink jet printing processes and thus generally have viscosity of from 1 to 10 cP, preferably 1 to 8 cP, more preferably 2 to 6 cP.

Conductivity controllers are required where droplet formation and control is achieved electrically (see below). It may not be necessary to add a conductivity controller if other components of the ink are charged species but if these components impart insufficient conductivity then a separate species ionisable in the ink, eg in the liquid vehicle, such as inorganic salt or organic salt, may be added. In the present case conductivity controllers are preferably simple ingestable inorganic salts such as sodium chloride.

The UV fluorescent inks described above may also be applied to other foods. For instance, a process is also provided in which indicia are printed on the surface of a citrus fruit by an ink jet printing method using an ink which is not visible under visible light but is visible under UV light. The indicia may be producer, packer, logistics/supply chain information or traceability information such as "organic fruit". In this process the skins may also be printed with visible indicia such as sell by date and sugar content. Similarly, the same process may be applied to other food items, provided all of the components are food grade.

The process of the invention is an ink jet printing process. In this well known process a stream of ink droplets is projected from a printer head to impact on the eggshells or other substrates as they are conveyed, typically at high speed, past the printer head. The droplets are controlled, typically electrically, so that they are deposited in a controlled array and the substrate is thereby printed with desired indicia.

The method may be the known "drop on demand" method in which ink droplets are generated as required to produce the predetermined array. Preferably however the method is the known continuous ink jet printing method. A continuous stream of droplets is supplied and the droplets are diverted electrically in order to produce the predetermined array. Droplets which are not deposited on the substrate are collected automatically and recycled to a return tank.

Such methods are well known.

The invention will now be illustrated with reference to the following examples.

### Examples

### Example 1

The following ink compositions are suitable for ink jet printing onto eggshells. Composition A is visible, having a red colour. Composition B is invisible under visible light but is fluorescent under UV light.

| Composition A | |
|---|---|
| Deionised water | 28.4% |
| Hydroxy propyl cellulose, grade LF | 0.7% |
| Food grade ethanol | 69.8% |
| Erythrosine (FD&C Red 3) | 1.1% |

| Composition B | |
|---|---|
| Deionised water new column | 28.4% |
| Hydroxy propyl cellulose, grade LF | 0.7% |
| Food grade ethanol | 69.8% |
| Fluorescent colourant | 1.1% |

The fluorescent colourant may be curcumin, quinine, caffeine or riboflavin.

In the process of the invention farm codings are printed onto egg shells using ink composition B in a continuous ink jet process. Subsequently, "sell by date" information is printed onto the egg shells using ink composition A by a continuous ink jet process.

### Example 2

The following compositions are suitable for printing onto citrus fruits. Composition C has a red colour and is visible under visible light. Composition D is invisible under visible light but is visible under UV light.

| Composition C | |
|---|---|
| Ethanol SDA 3A200 | 60.1% |
| Ammonia 26deg.Baume (28 to 30% NH₃) | 0.5% |
| Food grade dewaxed bleached shellac | 6.9% |
| Ethyl cellulose N-14 | 1.0% |
| Deionised water | 15.0% |
| Acetone | 15.0% |
| Erythrosine (FD&C Red 3) | 1.5% |

| Composition D | |
|---|---|
| Ethanol SDA 3A200 | 60.1% |
| Ammonia 26deg.Baume (28 to 30% NH₃) | 0.5% |
| Food grade dewaxed bleached shellac | 6.9% |
| Ethyl cellulose N-14 | 1.0% |
| Deionised water | 15.0% |
| Acetone | 15.0% |
| Fluorescent colourant | 1.5% |

The fluorescent colourant may be curcumin, quinine, caffeine or riboflavin.

The ink of composition C is used for printing visible indicia onto the skins of citrus fruit, such as sell by date and sugar content, by a continuous ink jet printing process. Subsequently ink composition D is used to print further indicia such as producer, packer, logistics/supply chain information or traceability information such as "organic fruit" onto the skins of the citrus fruit.

## Claims

1. A method of printing onto an eggshell using an ink jet printing method in which the ink is invisible under visible light but is fluorescent under ultraviolet light.

2. A method according to claim 1 in which the process also comprises printing onto the eggshell using an ink jet printing method in which the ink is visible under visible light.

3. A method according to claim 1 or claim 2 in which the ink which is invisible under visible light comprises an ultraviolet fluorescent colourant selected from the group consisting of curcumin, riboflavin, quinine and caffeine, preferably quinine or caffeine.

4. A method according to any preceding claim in which all ink components are food grade.

5. An ink suitable for ink jet printing, the ink being invisible under visible light but visible under ultraviolet light, the ink containing a colourant which comprises a material selected from the group consisting of erythrosine, quinine and caffeine.
